# EUROPEAN PATENT APPLICATION

(11) **EP 4 763 910 A1**
(43) Date of publication of application: **24.06.2026**
(21) Application number: 25769350.7
(22) Date of filing: 07.03.2025
(51) Int. Cl.: C08L 9/06, C08K 5/31, C08K 13/06, C08K 3/04, B60C 1/00, C08L 9/00, C08L 25/16, C08L 91/00, C08L 7/00, C08K 7/26, C08K 9/06, C08K 3/06, C08K 5/47, C08J 3/22

(54) **ZINC-FREE RUBBER COMPOSITION, TREAD RUBBER, AND PREPARATION METHOD AND USE THEREOF**

(30) Priority: 11.03.2024 CN 202410275504
(71) Applicant: Eve Rubber Institute Co., Ltd., Qingdao, Shandong 266045 (CN); Sailun Group Co., Ltd., Qingdao, Shandong 266000 (CN)
(72) Inventor: JIA, Weijie, Qingdao, Shandong 266045 (CN); XU, Zhaolai, Qingdao, Shandong 266045 (CN); WANG, Shuang, Qingdao, Shandong 266045 (CN); XIE, Mingxiu, Qingdao, Shandong 266045 (CN); LIU, Zhen, Qingdao, Shandong 266045 (CN); HE, Fujin, Qingdao, Shandong 266045 (CN); ZHANG, Lin, Qingdao, Shandong 266045 (CN)
(74) Representative: Novagraaf Technologies
(86) International application number: PCT/CN2025/081341
(87) International publication number: WO 2025/190179

(57) **Abstract**

Provided in the present invention is a zinc-free rubber composition, a tread rubber, and a preparation method and application thereof. The rubber composition includes: a diene rubber, an antioxidant, a reinforcing functional filler, and a vulcanization system reagent. The diene rubber includes a special structural diene rubber, where a chemical structural formula of the special structural diene rubber includes a branched chain and/or a side group, and the branched chain and/or the side group includes an alkenyl double bond and/or an aromatic group. The rubber composition using the special structural diene rubber in a certain proportion can obtain, without containing zinc, rubber properties, such as crosslinking density, hardness, stress at definite elongation, hysteresis, etc., which are close to those of a zinc-containing rubber composition, thereby meeting requirements for properties of manufactured tires. The preparation of the tread rubber using the zinc-free rubber composition of the present invention may be performed by using a mature method, and is high in safety.

## Description

### Technical Field

The present invention relates to the technical field of tread rubber, and specifically to a zinc-free rubber composition, a tread rubber, and a preparation method and application thereof.

### Background

It is widely recognized within the industry that zinc oxide or zinc-containing auxiliary agents are indispensable as rubber vulcanization activators or functional auxiliary agents in current tire formula design. Removing zinc from an existing rubber composition results in low stress at definite elongation, low modulus, low hardness, and low crosslinking degree. Particularly in a diene rubber composition containing natural rubber, isoprene rubber, butyl rubber, etc., the absence of zinc oxide may cause a vulcanization reversion effect that makes the composition completely unusable. Therefore, the current zinc oxide content in the diene rubber composition used for tire manufacturing is at least 2 parts.

However, from the perspective of sustainable development and environmental protection, the zinc oxide in tires enters a water circulation system with tire wear particles, causing environmental water pollution. Both the European Commission's Directive 2400/73/EC and California's 2016 SB1260 bill recommend restricting the use of zinc or zinc oxide in tires.

Therefore, requirements for zinc-free production are proposed to tire manufacturers. However, completely removing zinc from the current diene rubber compositions results in reduced crosslinking degree, decreased hardness and stress at definite elongation, and increased hysteresis loss. The use values of tires manufactured with such compositions are significantly reduced.

In order to simultaneously achieve environmental goals and ensure tire performance, research and development efforts have been undertaken both domestically and internationally to create zinc-free or low-zinc rubber compositions. For example, Patent CN109369994B discloses a low-zinc rubber composition containing 0.5-1 parts of zinc. By replacing zinc oxide with nano-zinc oxide with a high specific surface area and using zinc hydroxide particles as a carrier, the use of zinc is reduced on the basis of high reactivity and high dispersion, thereby ensuring excellent performance of the composition. Patent CN115678038B discloses replacement of zinc oxide with a lignin-zinc salt composite. The purpose of reducing the usage of the zinc oxide is achieved due to its excellent dispersibility. When the method is applied to tread rubber, the wear resistance of tires may be ensured, the rolling resistance of the tires may be reduced, and the service life of the tires may be prolonged. Both the above two patents achieves the purpose of reducing usage by improving zinc dispersion, but it cannot completely eliminate the environmental hazards posed by zinc. The Patent CN102300917B discloses a rubber composition containing no zinc or less than 0.5 parts of zinc and an application thereof in tire manufacturing. Through the application of capped mercaptosilane, the processability of the zinc-free rubber compound (i.e., reducing viscosity and prolonging scorch time) is improved. Although the patent may reduce zinc usage or even do not contain zinc, it requires specific capped mercaptosilane. During high-temperature mixing, sulfhydryl may be further generated through reaction, showing irritating properties and unpleasant odors, thus posing potential safety concerns.

Therefore, there is a need to develop a zinc-free rubber composition that can overcome the limitations of specific auxiliary agents (e.g., certain silane) and be used in tire manufacturing without sacrificing rubber performance.

### Summary

The present invention is mainly intended to provide a zinc-free rubber composition, a tread rubber, and a preparation method and application thereof, so as to solve the problem of reduced performance of zinc-free rubber compositions in the related art.

In order to implement the above objective, an aspect of the present invention provides a zinc-free rubber composition. The rubber composition includes: a diene rubber, an antioxidant, a reinforcing functional filler, and a vulcanization system reagent. The diene rubber includes a special structural diene rubber, where a chemical structural formula of the special structural diene rubber includes a branched chain and/or a side group, and the branched chain and/or the side group includes an alkenyl double bond and/or an aromatic group.

Further, the special structural diene rubber is obtained by any one of butadiene and isoprene through polymerization, or the special structural diene rubber is obtained by any two or all three of butadiene, isoprene, and styrene through random copolymerization.

Further, the special structural diene rubber has a structure shown in Formula I, where a, b, c, d, e, and f are each independent integers greater than or equal to 0, and a, b, c, d, e, and f are not 0 at the same time.

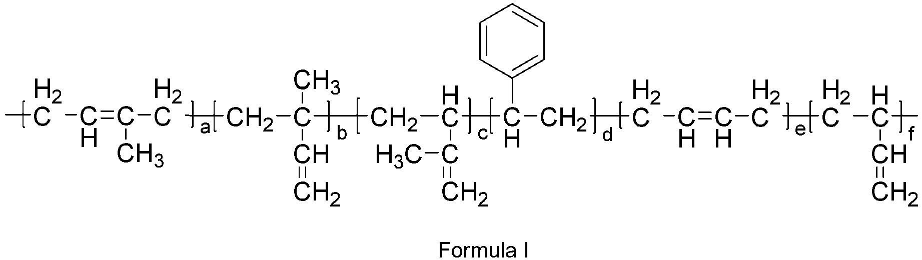

Further, a sum of the numbers of the alkenyl double bond and aromatic group on the side group and branched chain of the special structural diene rubber accounts for more than 15% of the sum of the alkenyl double bond and aromatic group of the special structural diene rubber.

Preferably, a molecular weight of the special structural diene rubber is 10000-4000000.

Further, the special structural diene rubber is more than 35% of the weight of the diene rubber, preferably, more than 50% of the weight of the diene rubber, and more preferably, more than 60% of the weight of the diene rubber.

Further, the reinforcing functional filler includes any one or more of a carbon-based filler, a silicon-based filler, and a carbon-silicon biphasic filler; preferably, a specific surface area of the reinforcing functional filler is 10-500 m²/g, more preferably 30-300 m²/g, and more preferably 50-300 m²/g; and preferably, the amount of the reinforcing functional filler is 20 parts-170 parts, more preferably 50 parts-130 parts.

Further, the vulcanization system reagent includes a vulcanizing agent and a vulcanizing promoting agent; preferably, the vulcanizing agent includes any one or more of sulfur and a sulfur carrier; and preferably, the vulcanizing promoting agent includes any one or more of a sulfenamide type accelerator, a thiazole type accelerator, and a guanidine type accelerator.

Further, the antioxidant includes any one or more of p-phenylenediamine, protective wax, quinoline, phenol, and triazine; and/or the zinc-free rubber composition further includes other auxiliary agents, and other auxiliary agents include any one or more of a silane coupling agent, stearic acid, an anti-aging agent, an anti-scorching agent, resin, and operating oil.

Further, the rubber composition includes, by weight, 100 parts of the diene rubber, 0-6 parts of the antioxidant, 20-170 parts of the reinforcing functional filler, 0.5-10 parts of the vulcanization system reagent, and 0-100 parts of other auxiliary agents.

Another aspect of the present invention provides a method for preparing a tread rubber. The preparation method includes: first mixing is performed on components in any one of the above zinc-free rubber compositions other than a vulcanization system reagent, and rubber discharge is performed to obtain masterbatch; and second mixing is performed on the masterbatch and the vulcanization system reagent, and rubber discharge is performed to obtain final rubber.

Further, the first mixing is either one or a combination of two of dry mixing and wet mixing.

Yet another aspect of the present invention provides a tread rubber, which is prepared by any one of the above rubber compositions or prepared by the above preparation method.

Still another of the present invention provides a tire, which includes the above tread rubber.

By using the technical solutions of the present invention, the rubber composition using the special structural diene rubber in a certain proportion can obtain, without containing zinc, rubber properties, such as crosslinking density, hardness, stress at definite elongation, hysteresis, etc., which are close to those of a zinc-containing rubber composition, thereby meeting requirements for properties of manufactured tires. The zinc-free rubber composition is used for preparing a tread rubber, and is zinc-free and environmentally friendly. Moreover, the rubber composition of the present invention does not require the addition of specific capped mercaptosilane (S-octanoylmercapto-propyl dihydroxy methylsilane), and may also avoid the reduction in filler-polymer interaction caused by the low sulfur content of the mercaptosilane, leading to a reduction in tire performance, as well as an irritating odor caused by a mercapto group produced by further reaction during high-temperature mixing. The preparation of the tread rubber using the zinc-free rubber composition of the present invention may be performed by using a mature method, and is high in safety.

### Detailed Description of the Embodiments

It is to be noted that the embodiments in the present invention and the features in the embodiments may be combined with one another without conflict. The present invention will be described below in detail with reference to the embodiments.

As analyzed in the Background of the present invention, there is a problem of reduced performance of zinc-free rubber compositions in the related art. In order to solve the problem, the present invention provides a zinc-free rubber composition, a tread rubber, and a preparation method and application thereof.

According to a typical implementation of the present invention, the present invention provides a zinc-free rubber composition. The rubber composition includes: a diene rubber, an antioxidant, a reinforcing functional filler, and a vulcanization system reagent. The diene rubber includes a special structural diene rubber, where a chemical structural formula of the special structural diene rubber includes a branched chain and/or a side group, and the branched chain and/or the side group includes an alkenyl double bond and/or an aromatic group.

Researchers involved in the present invention discovered during the experimental process that, the rubber composition using the special structural diene rubber in a certain proportion can obtain, without containing zinc, rubber properties, such as crosslinking density, hardness, stress at definite elongation, hysteresis, etc., which are close to those of a zinc-containing rubber composition, thereby meeting requirements for properties of manufactured tires. The zinc-free rubber composition is used for preparing a tread rubber, and is zinc-free and environmentally friendly. Moreover, the rubber composition of the present invention does not require the addition of specific capped mercaptosilane (S-octanoylmercapto-propyl dihydroxy methylsilane), and may also avoid the reduction in filler-polymer interaction caused by the low sulfur content of the mercaptosilane, leading to a reduction in tire performance, as well as an irritating odor caused by a mercapto group produced by further reaction during high-temperature mixing. The preparation of the tread rubber using the zinc-free rubber composition of the present invention may be performed by using a mature method, and is high in safety.

Rubber in the rubber composition in a vulcanization reaction has the following reaction steps and crosslinking forms.

| | |
|---|---|
| 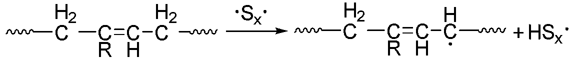 | Reaction step I |
| 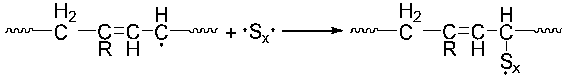 | Reaction step II |
| 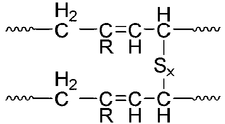 | Crosslinking form I |
| 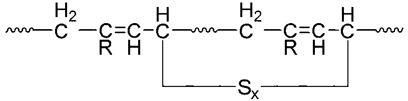 | Crosslinking form II |

The Crosslinking form II is an ineffective crosslink that cannot form a network and needs to be minimized or avoided. When a main chain includes numerous double bonds, there are more hydrocarbon radicals ( 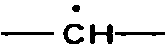 ), and a distance between adjacent radicals is short, there are more opportunities to form Crosslinking form II, and effective crosslink density is low.

In another aspect, if -Sx- is longer, the opportunity to form the Crosslinking form II is larger. However, zinc oxide participates in the reaction, a bond length of -Sx- may be reduced, the occurrence of the Crosslinking form II is reduced, ineffective crosslink is reduced, and the effective crosslink density is increased.

R-Sₓ-R'+ ZnO → R-Sₓ₋₁-R'+ ZnS

However, when using the special structural diene rubber, it is fount that introducing a double bond via the side group or branched chain reduces the number of double bonds on a macromolecular backbone of the rubber, and active α-H content is minimized, such that the generation of S-heterocycles (Crosslinking form II) can be reduced, thereby enhancing the effective crosslink density.

Specifically, the implementation of no zinc in the rubber with the special structure is based on the following vulcanization reaction principle: sulfur primarily reacts with the α-H in the rubber. The α-H shows high reactivity, and the vulcanization reaction consumes only a minimal amount of the α-H. The unreacted α-H causes rearrangement of the generated R-S_{X}-R, that is, the ineffective crosslinking of the Crosslinking form II, and the macromolecules fail to form a network, leading to a decline in all properties. The reaction principle of the zinc oxide during vulcanization is as follows. The generation of zinc sulfide stabilizes the vulcanization reaction, making it less prone to the rearrangement of the above molecular chain and resulting in less ineffective crosslinking, such that the zinc oxide is always an indispensable material in the tire industry.

*RSₓH + R'SₓH + ZnO* → *R-Sx-Zn-Sx-R'* + *H₂O* (1)

*R-Sₓ-Zn-Sₓ-R'* → *RS_{2X-1}R'* + *ZnS* (2)

During the course of research, the researchers of the present invention find that when the α-H is sufficiently low in number (or when the distance between adjacent α-H on the same macromolecule exceeds the length of the -Sx-), it becomes difficult for the rearrangement reaction to occur and generating the above ineffective crosslinking (Crosslinking form II).

Based on the above principles, the researchers of the present invention may remove the element zinc from the formula by controlling the number of the α-H. The number of the α-H depends on the double bond of the main chain. In another aspect, increasing the number of double bonds or aromatic groups in the side group and branched chain may reduce the number of the α-H (the random nature of a rubber structural unit extends the distance between the adjacent α-H), such that the zinc always used in a tread rubber formula can be removed.

In some embodiments of the present invention, the above special structural diene rubber is obtained by any one of butadiene and isoprene through polymerization, or the special structural diene rubber is obtained by any two or all three of butadiene, isoprene, and styrene through random copolymerization. The zinc-free rubber composition containing the special structural diene rubber with the structure has higher crosslinking density.

In some embodiments of the present invention, when the special structural diene rubber has a structure shown in Formula I below, the above zinc-free rubber composition has higher crosslinking density and better comprehensive performance.

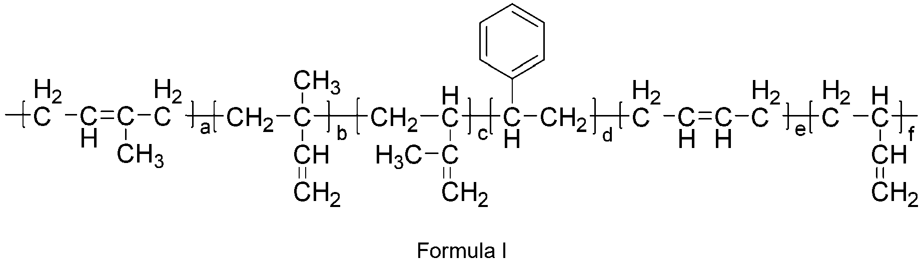

Where a, b, c, d, e, and f are each independent integers greater than or equal to 0, and a, b, c, d, e, and f are not 0 at the same time. Preferably, at least two of a, b, c, d, e, and f are not 0. Repeating units therein are distributed irregularly. In some preferred embodiments of the present invention, in the structural formula of the special structural diene rubber, a, b, and c are 0, and d, e, and f are not 0; or a, b, and c are not 0, and d, e, and f are 0; a, b, c, and d are 0, and e and f are not 0. The special structural diene rubber having the structure has higher crosslinking density.

In some preferred embodiments of the present invention, in order to further increase the crosslinking density of the rubber composition, the sum of the numbers of the alkenyl double bond and aromatic group on the side group and branched chain of the above special structural diene rubber accounts for more than 15% of the sum of the alkenyl double bond and aromatic group of the special structural diene rubber, such as 20%, 25%, 30%, 35%, 40%, 45%, 50%, 55%, 60%, 65%, 70%, 75%, 80%, 90%, or a value within a range between any two of the above. Those skilled in the art can understand that, the molecular structure of the special structural diene rubber may only include the side group or the branched chain, the side group or the branched chain may only include the alkenyl double bond or aromatic group, and the number of the alkenyl double bonds or aromatic groups on the side group or the branched chain accounts for more than 15% of the sum of the number of all the alkenyl double bonds and aromatic groups in the molecular structure of the special structural diene rubber. In some embodiments of the present invention, the alkenyl double bonds on the side group or the branched chain of the special structural diene rubber accounts for more than 15% of the sum of the numbers of the alkenyl double bonds and aromatic groups of the special structural diene rubber, such as 20%, 25%, 30%, 35%, 40%, 45%, 50%, 55%, 60%, 65%, 70%, 75%, 80%, 90%, or a value within a range between any two of the above.

In some embodiments of the present invention, a molecular weight of the special structural diene rubber is 10000-4000000, facilitating further improvement of the comprehensive performance of the tread rubber.

In some embodiments of the present invention, in order to further improve the hardness and crosslinking degree of the rubber composition, in the above zinc-free rubber composition, the special structural diene rubber is more than 35% of the weight of diene rubber, preferably more than 50% of the weight of diene rubber, and more preferably more than 60% of the weight of diene rubber. For example, the weight content of the above special structural diene rubber in the diene rubber is 65%, 70%, 75%, 80%, 85%, 90%, 95%, or 100%, and thus the rubber composition has excellent comprehensive performance. More preferably, the weight content of the above special structural diene rubber in the diene rubber is more than 72%, indicating particularly significant performance enhancement effects for the rubber.

The reinforcing functional filler can synergistically interact with the special structural diene rubber of the present invention to further enhance the crosslinking degree, hardness, and tensile resistance of the rubber, and its specific type may be selected from the related art. For example, the reinforcing functional filler includes, but is not limited to, any one or more of a carbon-based filler, a silicon-based filler, and a carbon-silicon biphasic filler. In some preferred embodiments of the present invention, a specific surface area of the reinforcing functional filler is 10-500 m²/g, more preferably 30-300 m²/g, and more preferably 50-300 m²/g. The reinforcing functional filler with the above specific surface area has a more pronounced effect, thereby further enhancing the comprehensive performance of the zinc-free rubber composition.

In some embodiments of the present invention, the amount of the reinforcing functional filler is 20 parts-170 parts, more preferably 50 parts-130 parts, where part indicates parts by weight of the reinforcing functional filler or other auxiliary agents per 100 parts by weight of rubber.

In some embodiments of the present invention, the above vulcanization system reagent includes a vulcanizing agent and a vulcanizing promoting agent; preferably, the vulcanizing agent includes any one or more of sulfur and a sulfur carrier; and preferably, the vulcanizing promoting agent includes any one or more of a sulfenamide type accelerator, a thiazole type accelerator, and a guanidine type accelerator. The vulcanization performance of the above zinc-free rubber composition can be further improved by using the above vulcanization system reagent.

The above antioxidant may be selected from the related art. In some embodiments of the present invention, the antioxidant includes any one or more of p-phenylenediamine, protective wax, quinoline, phenol, and triazine. The zinc-free rubber composition of the present invention has excellent comprehensive performance.

The zinc-free rubber composition of the present invention may further include other zinc-free auxiliary agents in the related art. These auxiliary agents impart corresponding functionalities to the rubber, thereby meeting the requirements for the rubber in specific application environment. Exemplarily, other auxiliary agents comprise any one or more of a silane coupling agent, stearic acid, an anti-aging agent, an anti-scorching agent, resin, and operating oil.

In some embodiments of the present invention, the rubber composition includes, by weight, 100 parts of the diene rubber (dry size), 0-6 parts of the antioxidant, 20-170 parts of the reinforcing functional filler, 0.5-10 parts of the vulcanization system reagent, and 0-100 parts of other auxiliary agents, such that the synergistic effect of each component can be better achieved, thereby further improving the comprehensive performance of the rubber composition.

Another typical implementation of the present invention provides a method for preparing a tread rubber. The preparation method includes: first mixing is performed on components in any one of the above zinc-free rubber compositions other than a vulcanization system reagent, and rubber discharge is performed to obtain masterbatch; and second mixing is performed on the masterbatch and the vulcanization system reagent, and rubber discharge is performed to obtain final rubber.

The tread rubber prepared by the above method, due to the absence of any zinc reagents in the raw materials, produces no zinc discharge during use, is environmentally friendly, and has crosslinking density, hardness, stress at definite elongation, hysteresis, etc. comparable to those of a zinc-containing rubber composition, thereby meeting the performance requirements for tire manufacturing. Further, the method is mature in process and high in safety.

In the method of preparing tread rubber of the present invention, the specific process and parameters for mixing may refer to the related art, and the present invention does not impose any particular requirements. In some embodiments of the present invention, the above first mixing is either one or a combination of two of dry mixing and wet mixing. The first mixing, including dry mixing, may be performed in one stage or a plurality of stages, and the present invention is not limited thereto.

In some embodiments of the present invention, the rubber is prepared by the above zinc-free rubber composition according to the following method. (1) The rubber, a processing auxiliary agent, a reinforcing functional filler, an antioxidant, and other reagents other than a vulcanization system reagent are mixed in one or more stages by means of kneading, and a mixing temperature reaches 125 °C-200 °C for rubber discharge, serving as a first stage masterbatch; (2) one or more thermal mechanical kneading is performed on the first stage masterbatch, a kneading temperature of 125 °C-180 °C is maintained, and rubber discharge is performed for 0-1200 s, serving as a second stage masterbatch; and any remaining processing auxiliary agents, fillers, and antioxidants are added all at once or in batches during this stage; and (3) the second stage masterbatch and the vulcanization system reagent are mixed together in an internal mixer, the mixing temperature is ≤120 °C, and rubber discharge is perform to obtain final rubber, which is tread rubber.

The tread rubber prepared by the above method, due to the absence of any zinc reagents in the raw materials, produces no zinc discharge during use, is environmentally friendly, and has crosslinking density, hardness, stress at definite elongation, hysteresis, etc. comparable to those of a zinc-containing rubber composition, thereby meeting the performance requirements for tire manufacturing.

The specific method for preparing tread rubber using the tread rubber composition of the present invention via liquid-phase mixing may be selected from the related art, and the present invention imposes no particular requirements. For example, the tread rubber may be prepared by the above zinc-free rubber composition according to the following method. (1) The rubber, the filler, a silane coupling agent, resin (if the content is not zero), TDAD oil (if the content is not zero), stearic acid, the antioxidant, and protective wax are mixed in a liquid medium (water or organic solvent) to obtain wet masterbatch; and (2) the wet masterbatch is mixed with sulfur powder, a promoting agent CZ, and a promoting agent DPG in the internal mixer, and the mixing temperature reaches ≤120 °C, so as to obtain the final rubber. (3) The final rubber is vulcanized on a flat vulcanizing press, so as to obtain vulcanized rubber. The wet mixing of the tread rubber composition of the present invention facilitates further improvement of the uniformity and consistency of rubber molding, can cause the rubber to have better tear resistance and tensile strength, such that the rubber may be applied to preparation of tires in harsh environments.

According to another typical implementation of the present invention, the present invention provides a tread rubber. The tread rubber is prepared by any one of the above rubber compositions or prepared by any one of the above preparation methods. The tread rubber does not contain zinc, produces no zinc discharge during use, is environmentally friendly, and has crosslinking density, hardness, stress at definite elongation, hysteresis, etc. comparable to those of a zinc-containing rubber composition, thereby meeting the performance requirements for tire manufacturing.

Yet another typical implementation of the present invention provides a tire, which includes the above tread rubber. The tire uses the above tread rubber, and thus can effectively solve the environment problem of zinc discharge, and is good in safety.

The beneficial effects that the present invention may be achieved are further described below with reference to the embodiments and comparative examples.

### 1. Rubber composition formula

Formulas of rubber compositions in embodiments and comparative examples of the present invention were shown in Table 1 and Table 2 below.

**Table 1 (in parts)**

| | Compara tive example 1 | Embodi ment 1 | Compara tive example 2 | Embodi ment 2 | Compara tive example 3 | Embodi ment 3 | Compara tive example 4 | Embodi ment 4 |
|---|---|---|---|---|---|---|---|---|
| Composi tion number | A1 | A2 | B1 | B2 | C1 | C2 | D1 | D2 |
| SBR-1 | 100 | 100 | 85 | 85 | | | 100 | 100 |
| BR-2 | | | 15 | 15 | | | | |
| SBR-3 | | | | | 100 | 100 | | |
| Filler-1 | 84 | 84 | 105 | 105 | 60 | 60 | | |
| Filler-2 | | | | | | | 84 | 84 |
| Silane coupling agent | 6.72 | 6.72 | 8.4 | 8.4 | 4.8 | 4.8 | | |
| Resin | | | 10 | 10 | | | | |
| TDAE oil | 28 | 28 | 28 | 28 | | | 28 | 28 |
| Stearic acid | 2 | 2 | 2 | 2 | 2 | 2 | 2 | 2 |
| Zinc oxide of indirect method | 3.5 | 0 | 3.5 | 0 | 3.5 | 0 | 3.5 | 0 |
| Antioxida nt 4020 | 2.5 | 2.5 | 2.5 | 2.5 | 2.5 | 2.5 | 2.5 | 2.5 |
| Protectiv e wax | 2 | 2 | 2 | 2 | 2 | 2 | 2 | 2 |
| Sulfur powder | 1.4 | 1.4 | 1.4 | 1.4 | 1.8 | 1.8 | 1.5 | 1.5 |
| Promotin g agent CZ | 2.1 | 2.1 | 2.1 | 2.1 | 2.0 | 2.0 | 1.5 | 1.5 |
| Promotin g agent DPG | 2.0 | 2.0 | 2.5 | 2.5 | 1 | 1 | | |

**Table 2 (in parts)**

| | Embodime nt 5 | Embodime nt 6 | Embodime nt 7 | Embodime nt 8 | Comparati ve example 5 | Comparati ve example 6 | Comparati ve example 7 |
|---|---|---|---|---|---|---|---|
| SBR-1 | | | 70 | 50 | | 20 | |
| IR-4 | 100 | | | | | | |
| BR-5 | | 100 | | | | | |
| NR-6 | | | 30 | 50 | 100 | 80 | 100 |
| Filler-1 | 55 | 55 | 75 | 69.5 | 55 | 60.8 | 55 |
| Filler2 | | | | | | | |
| Silane coupling | 5.5 | 5.5 | 6.35 | 6.11 | 5.5 | 5.74 | 5.5 |
| agent | | | | | | | |
| Resin | 0 | 0 | 0 | 0 | 0 | 0 | 0 |
| TDAE oil | | 0 | 19.6 | 14 | 0 | 5.6 | 0 |
| Stearic acid | 2 | 2 | 2 | 2 | 2 | 2 | 2 |
| Zinc oxide of indirect method | 0 | 0 | 0 | 0 | 3.5 | 0 | 0 |
| Antioxida nt 4020 | 2.5 | 2.5 | 2.5 | 2.5 | 2.5 | 2.5 | 2.5 |
| Protectiv e wax | 2 | 2 | 2 | 2 | 2 | 2 | 2 |
| Sulfur powder | 1.8 | 1.4 | 1.52 | 1.6 | 1.8 | 1.72 | 1.8 |
| Promotin g agent CZ | 2.3 | 2.1 | 2.16 | 2.15 | 2.3 | 2.26 | 2.3 |
| Promotin g agent DPG | 1.0 | 2.0 | 1.7 | 1.5 | 1.0 | 1.2 | 1.0 |

Sources of the materials in Table 1 and Table 2 are as follows.

SBR-1, PetroChina Dushanzi Petrochemical Company SSBR2564S (styrene 25%, ethylene 64%, oil filled 37.5 parts).

BR-2, Sinopec Qilu Petrochemical Company BR9000 (nickel-based high cis polybutadiene, content of cis-1,4-polybutadiene being 97%).

SBR-3, Sinopec Qilu Petrochemical Company ESBR1502 (styrene content 23.5%, ethylene 15%).

IR-4, laboratory sample (catalyst molybdenum pentachloride, content of 3,4-(1,2-)polyisoprene being 60%, polyisoprene rubber with a 1,4-polyisoprene content being 40%).

BR-5, laboratory sample (catalyst molybdenum pentachloride, content of 1,2-polybutadiene being 55%, atactic branched polybutadiene rubber with a 1,4-polybutadiene content being 45%).

NR-6, 20# Thai-Chinese Rayong, Thailand standard rubber STR 20 (natural rubber with a cis-1,4-polyisoprene content being 98%).

Filler-1, Quechen silica microsphere precipitation method silica dioxide 165MP (BET 150-190 m²/g).

Filler-2, Black Cat Carbon Black furnace black N330 (BET 71-85 m2/g).

Silane coupling agent, Nanjing Shuguang Chemical Industry Group Co., Ltd. Si69.

Resin, Arizona Company, USA poly-α-methyl styrene resin SA85.

TDAE oil, H&R Group V700.

Stearic acid, Malaysia general reagent stearic acid (AR).

Indirect zinc oxide, Weifang Orlon Industry Co., Ltd.

Antioxidant 6PPD/4020, Shandong Sunsune Chemical Company.

Protective wax, Suzhou Paramelt Company Cmax31.

Sulfur powder, Chaoyang Mingyu Chemical Co., Ltd.

Promoting agent CZ, Kemai Chemical Co., Ltd.

Promoting agent DPG, Shandong Sunsune Chemical Company.

Now, the method for preparing tread rubber using the above tread rubber composition formula is described below.

The masterbatch may be prepared through dry mixing and wet mixing, and details are as follows.

First, the tread rubber was prepared by the rubber compositions in the embodiments and the comparative examples according to the following method.
(1) The rubber, the filler, the silane coupling agent, the resin, the TDAD oil, stearic acid, indirect zinc oxide (if the content was not zero), the antioxidant, and the protective wax were mixed, and the mixing temperature reached 155 °C for rubber discharge, serving as the first stage masterbatch.
(2) One or more thermal mechanical kneading was performed on the first stage masterbatch, and rubber discharge was performed for 0-120 s, serving as the second stage masterbatch.
(3) The second stage masterbatch was mixed with the sulfur powder, the promoting agent CZ, and the promoting agent DPG in the internal mixer, and the mixing temperature reached 115 °C, so as to obtain the final rubber.
(4) The final rubber was vulcanized on a flat vulcanizing press, so as to obtain vulcanized rubber.

The final rubber prepared and the vulcanized rubber obtained by vulcanizing the final rubber were tested, and test results were shown in Table 3 and Table 4.

Further, the tread rubber was prepared by the rubber compositions in the embodiments and the comparative examples according to the following method.
(1) N-hexane was used as a solvent, a rubber solution with a concentration being 20 wt% was prepared, and based on 100 parts of a rubber according to the formulation of the composition, a filler, a silane coupling agent, a resin (if the content was not zero), TDAD oil (if the content was not zero), stearic acid, indirect zinc oxide (if the content was not zero), an antioxidant, and a protective wax were mixed in the rubber solution to form a mixture. After mixing and dispersion, the mixture was directly introduced in 180 °C N₂ to complete condensation and solvent removal, so as to obtain the wet masterbatch.
(2) The wet masterbatch was mixed with the sulfur powder, the promoting agent CZ, and the promoting agent DPG in the internal mixer, and the mixing temperature reached 115 °C, so as to obtain the final rubber.
(3) The final rubber was vulcanized on a flat vulcanizing press, so as to obtain vulcanized rubber.

Properties before and after vulcanization of the vulcanized rubber (vulcanization conditions: 165 °C, t 90+5 minutes) are shown in Tables 5 and 6.

The vulcanization characteristics of the rubber are determined according to GB/T1232.1-2016 Determination of Vulcanization Characteristics of Non-Rotating Vulcanometer for Rubber, and test results are shown in Table 3 and Table 4.

The Mooney viscosity of the rubber is determined according to GB/T 1231.1-2006 Unvulcanized Rubber-Determination by Disc Shear Viscometer-Part 1: Determination of Mooney Viscosity, and test results are shown in Table 5 and Table 6.

A Mooney scorch time is determined according to GB/T 1233-2008 Determination of Initial Vulcanization Characteristics of Unvulcanized Rubber Using Disc Shear Viscometer, and test results are shown in Table 5 and Table 6.

The physical properties (tensile strength, elongation at break, 100% stress at definite elongation, and 300% stress at definite elongation) of the rubber are determined according to GB/T 528-2009 Determination of Tensile Stress-Strain Properties of Vulcanized Rubber or Thermoplastic Rubber, and results are shown in Table 3 and Table 4.

The hardness of the rubber is determined according to GB/T 531.1-2008 Test Methods for Indentation Hardness of Vulcanized Rubber or Thermoplastic Rubber-Part 1: Shore Durometer Method (Shore Hardness), and test results are shown in Table 3 and Table 4.

The 20 °C elastic modulus of the rubber is determined according to GB/T 9870.1-2006 Determination of Dynamic Performance of Vulcanized Rubber or Thermoplastic Rubber-Part 1: General Rules, the tanδmax of the rubber is determined by a rotational rheometer, and test results are shown in Tables 3-6.

**Table 3 Physical properties of rubber**

| | Compara tive example 1 | Embodi ment 1 | Compara tive example 2 | Embodi ment 2 | Compara tive example 3 | Embodi ment 3 | Compara tive example 4 | Embodi ment 4 |
|---|---|---|---|---|---|---|---|---|
| Composi tion number | A1 | A2 | B1 | B2 | C1 | C2 | D1 | D2 |
| 165 °C MH, dNm | 21.1 | 21.6 | 12.2 | 12.0 | 14.2 | 14.5 | 15.6 | 15.7 |
| Tensile strength, MPa | 19.8 | 21.6 | 19.4 | 21.0 | 18.4 | 18.7 | 18.9 | 18.7 |
| Elongati on rate, % | 382 | 351 | 457 | 391 | 416 | 412 | 476 | 463 |
| 100% stress at definite elongatio n, MPa | 2.8 | 3.2 | 2.3 | 2.5 | 3.0 | 3.1 | 3.0 | 3.2 |
| 300% stress at definite elongatio n, MPa | 14.0 | 17.7 | 14.3 | 15.0 | 12.5 | 13.0 | 11.9 | 12.4 |
| T300/T1 00 | 5.0 | 5.5 | 6.2 | 6.0 | 4.2 | 4.2 | 4.0 | 3.9 |
| Hardnes s, Shore A | 64 | 64 | 58 | 60 | 62 | 64 | 60 | 62 |
| 60 °C tanδmax | 0.17 | 0.17 | 0.14 | 0.14 | 0.23 | 0.23 | 0.14 | 0.14 |
| 20 °C E', MPa | 13.5 | 14.2 | 10.9 | 11.3 | 6.4 | 6.9 | 12.6 | 13.1 |

From the test results in Table 3, it may be seen that, the rubber (Embodiments 1-4) prepared using the zinc-free rubber composition of the present invention has crosslinking density, modulus, stress, hardness, mechanical properties, and hysteresis properties comparable to those of conventional zinc-containing rubber (Comparative examples 1-4), and thus may be applied to tire manufacturing.

**Table 4 Physical properties of rubber**

| | Comparative example 5 | Embodiment 5 | Embodiment 6 | Embodiment 7 | Embodiment 8 | Comparative example 6 | Comparative example 7 |
|---|---|---|---|---|---|---|---|
| 165 °C MH, dNm | 16.8 | 18.8 | 20.2 | 18.6 | 18.1 | 11.2 | 10.6 |
| Tensile strength, MPa | 22.8 | 25.4 | 22.2 | 19.7 | 19.6 | 19.6 | 20.1 |
| Elongatio n rate, % | 437 | 438 | 306 | 396 | 400 | 600 | 654 |
| 100% stress at definite elongatio n, MPa | 3.0 | 3.2 | 4.0 | 2.6 | 2.8 | 1.2 | 1.0 |
| 300% stress at definite elongatio n, MPa | 14.7 | 16.3 | 20.8 | 11.8 | 12.4 | 5.9 | 4.9 |
| T300/T1 00 | 4.9 | 5.1 | 5.2 | 4.5 | 4.4 | 4.8 | 4.9 |
| Hardnes s, Shore A | 56 | 58 | 64 | 61 | 60 | 41 | 40 |
| 60 °C tanδmax | 0.08 | 0.09 | 0.08 | 0.14 | 0.12 | 0.22 | 0.24 |
| 20 °C E', MPa | 4.0 | 3.0 | 8.6 | 8.1 | 7.2 | 1.7 | 1.6 |

From Table 4, it may be seen that, conventional natural rubber used in Comparative example 5 requires the addition of zinc oxide to promote vulcanization, so as to obtain the rubber suitable for tire manufacturing. In contrast, Embodiments 5 and 6 achieve rubber performance comparable to that in Comparative example 5 without zinc oxide by using the diene rubber with a specific structure.

Since the weight of the special structural diene rubber in Comparative examples 6 and 7 is below 35%, both mechanical properties and hardness show a significant reduction. The 60 °C tanδₘₐₓ data is nearly double that of Embodiments 7 and 8, indicating a severe reduction in the hysteresis performance of the rubber. This demonstrates that the special structural diene rubber needs to reach a specific proportion to achieve the physical properties of conventional zinc-containing rubber.

**Table 5 Physical properties of rubber**

| | Comparative example 1 | Embodiment 1 | Comparative example 2 | Embodiment 2 | Comparative example 3 | Embodiment 3 |
|---|---|---|---|---|---|---|
| Property before vulcanization | | | | | | |
| Mooney (ML1+4 100 °C), MU | 81 | 83 | 65 | 69 | 82 | 86 |
| T5 (125 °C large rotor), min | 32 | 28 | 36 | 30 | 26 | 18 |

| Property after vulcanization | | | | | | |
|---|---|---|---|---|---|---|
| △G' (0.1%-50%), MPa | 1.2 | 1.4 | 0.6 | 0.7 | 4.8 | 5.3 |

**Table 6**

| | Comparative example 5 | Embodiment 5 | Embodiment 6 | Embodiment 7 | Embodiment 8 | Comparative example 6 | Comparative example 7 |
|---|---|---|---|---|---|---|---|
| Property before vulcanization | | | | | | | |
| Mooney (ML1+4 100 °C), MU | 72 | 76 | 80 | 65 | 60 | 64 | 76 |
| t5 (125 °C large rotor), min | 22 | 17 | 20 | 17 | 22 | 17 | 14 |

| Property after vulcanization | | | | | | | |
|---|---|---|---|---|---|---|---|
| ΔG' (0.1%-50 %), MPa | 1.5 | 1.3 | 1.3 | 1.1 | 0.9 | 1.5 | 1.2 |

It may be seen from the above description that, in the above embodiments of the present invention, the following technical effects are realized. When using the special structural diene rubber, introducing a double bond via the side group or branched chain reduces the number of double bonds on a macromolecular backbone of the rubber, and active α-H content is minimized, such that the generation of S-heterocycles (Crosslinking form II) can be reduced, thereby enhancing the effective crosslink density. Tests find that, the rubber composition using the special structural diene rubber in a certain proportion can obtain, without containing zinc, rubber properties, such as crosslinking density, hardness, stress at definite elongation, hysteresis, etc., which are close to those of a zinc-containing rubber composition, thereby meeting requirements for properties of manufactured tires. The zinc-free rubber composition is used for preparing a tread rubber, and is zinc-free and environmentally friendly. Moreover, the rubber composition of the present invention does not require the addition of specific capped mercaptosilane (S-octanoylmercapto-propyl dihydroxy methylsilane), and may also avoid the reduction in filler-polymer interaction caused by the low sulfur content of the mercaptosilane, leading to a reduction in tire performance, as well as an irritating odor caused by a mercapto group produced by further reaction during high-temperature mixing. The preparation of the tread rubber using the zinc-free rubber composition of the present invention may be performed by using a mature method, and is high in safety.

The above are only the preferred embodiments of the present invention and are not intended to limit the present invention. For those skilled in the art, the present invention may have various modifications and variations. Any modifications, equivalent replacements, improvements and the like made within the spirit and principle of the present invention all fall within the scope of protection of the present invention.

## Claims

1. A zinc-free rubber composition, comprising: a diene rubber, an antioxidant, a reinforcing functional filler, and a vulcanization system reagent, wherein the diene rubber comprises a special structural diene rubber, and a chemical structural formula of the special structural diene rubber comprises a branched chain and/or a side group, and the branched chain and/or the side group includes an alkenyl double bond and/or an aromatic group.

2. The rubber composition according to claim 1, wherein the special structural diene rubber is obtained by any one of butadiene and isoprene through polymerization, or the special structural diene rubber is obtained by any two or all three of butadiene, isoprene, and styrene through random copolymerization.

3. The rubber composition according to claim 2, wherein the special structural diene rubber has a structure shown in Formula I: 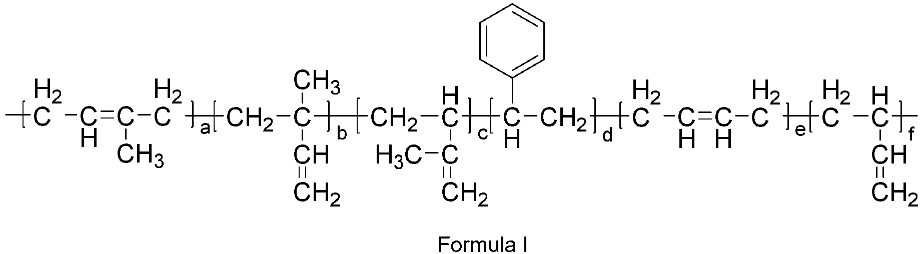 where a, b, c, d, e, and f are each independent integers greater than or equal to 0, and a, b, c, d, e, and f are not 0 at the same time.

4. The rubber composition according to claim 1, wherein a sum of the numbers of the alkenyl double bond and aromatic group on the side group and branched chain of the special structural diene rubber accounts for more than 15% of the sum of the alkenyl double bond and aromatic group of the special structural diene rubber; and
preferably, a molecular weight of the special structural diene rubber is 10000-4000000.

5. The rubber composition according to claim 1, wherein the special structural diene rubber is more than 35% of the weight of the diene rubber, preferably, more than 50% of the weight of the diene rubber, and more preferably, more than 60% of the weight of the diene rubber.

6. The rubber composition according to claim 1, wherein the reinforcing functional filler comprises any one or more of a carbon-based filler, a silicon-based filler, and a carbon-silicon biphasic filler;
preferably, a specific surface area of the reinforcing functional filler is 10-500 m²/g, more preferably 30-300 m²/g, and more preferably 50-300 m²/g; and
preferably, the amount of the reinforcing functional filler is 20 parts-170 parts, more preferably 50 parts-130 parts.

7. The rubber composition according to claim 1, wherein the vulcanization system reagent comprises a vulcanizing agent and a vulcanizing promoting agent;
preferably, the vulcanizing agent comprises any one or more of sulfur and a sulfur carrier; and
preferably, the vulcanizing promoting agent comprises any one or more of a sulfenamide type accelerator, a thiazole type accelerator, and a guanidine type accelerator.

8. The rubber composition according to claim 1, wherein the antioxidant comprises any one or more of p-phenylenediamine, protective wax, quinoline, phenol, and triazine; and/or
the zinc-free rubber composition further comprises other auxiliary agents, and other auxiliary agents comprise any one or more of a silane coupling agent, stearic acid, an anti-aging agent, an anti-scorching agent, resin, and operating oil.

9. The rubber composition according to any one of claims 1 to 8, wherein the zinc-free rubber composition comprises, by weight, 100 parts of the diene rubber, 0-6 parts of the antioxidant, 20-170 parts of the reinforcing functional filler, 0.5-10 parts of the vulcanization system reagent, and 0-100 parts of other auxiliary agents.

10. A method for preparing a tread rubber, comprising: performing first mixing on components in the zinc-free rubber composition according to any one of claims 1 to 9 other than a vulcanization system reagent, and performing rubber discharge to obtain masterbatch; and performing second mixing on the masterbatch and the vulcanization system reagent, and performing rubber discharge to obtain final rubber.

11. The preparation method according to claim 10, wherein the first mixing is either one or a combination of two of dry mixing and wet mixing.

12. A tread rubber, prepared by the zinc-free rubber composition according to any one of claims 1 to 9 or prepared by the preparation method according to claim 10 or 11.

13. A tire, comprising the tread rubber according to claim 12.
